# NEUE EUROPÄISCHE PATENTSCHRIFT

(11) **EP 2 531 536 B2**
(45) Veröffentlichungstag und Bekanntmachung des Hinweises auf die Entscheidung über den Einspruch: **15.11.2017**
(45) Hinweis auf die Patenterteilung: 19.03.2014
(21) Anmeldenummer: 11701150.2
(22) Anmeldetag: 31.01.2011
(51) Int. Cl.: C08F 220/06, C08F 220/18, D21H 19/44

(54) **ASSOZIATIVVERDICKER AUS SÄUREMONOMER, ASSOZIATIVMONOMER UND NICHTIONISCHEM MONOMER**
ASSOCIATIVE THICKENING AGENT MADE OF ACID MONOMERS, ASSOCIATIVE MONOMERS, AND NON-IONIC MONOMERS
ÉPAISSISSANT ASSOCIATIF COMPOSÉ DE MONOMÈRE ACIDE, MONOMÈRE ASSOCIATIF ET MONOMÈRE NON IONIQUE

(30) Priorität: 03.02.2010 EP 10152496
(43) Veröffentlichungstag der Anmeldung: 12.12.2012
(73) Patentinhaber: BASF SE, 67056 Ludwigshafen am Rhein (DE)
(72) Erfinder: ZACHARIAS, Philipp, 68169 Mannheim (DE); SEYFFER, Hermann, 69123 Heidelberg (DE); GUBAYDULLIN, Ilshat, 67071 Ludwigshafen (DE); HANCIOGULLARI, Harutyun, 67117 Limburgerhof (DE); BOTHE, Marc, 67590 Monsheim (DE)
(74) Vertreter: BASF IP Association
(86) Internationale Anmeldenummer: PCT/EP2011/051275
(87) Internationale Veröffentlichungsnummer: WO 2011/095444

(56) Entgegenhaltungen:
- WO-A2-2006/130675
- US-A- 5 770 760
- US-B2- 7 288 616

## Beschreibung

Die Erfindung betrifft einen durch radikalische Polymerisation erhältlichen Assoziativverdicker, dessen Herstellung und dessen Verwendung in Papiersteichmassen. Der Assoziativverdicker ist gebildet aus (a) Säuremonomeren, ausgewählt aus ethylenisch ungesättigten C₃- bis C₈-Carbonsäuren, (b) Assoziativmonomeren der allgemeinen Formel H₂C=CR¹-COO-(EO)ₙ-R², wobei R¹ Wasserstoff oder Methyl bedeutet, n eine Zahl von mindestens zwei bedeutet, und R² eine C₈-C₃₀ Alkylgruppe oder eine C₈-C₃₀ Alkarylgruppe bedeutet und (c) nichtionischen, von a) und b) verschiedenen, copolymerisierbaren Monomeren, wobei das Reaktionsprodukt nach der Polymerisation mit nichtionische Radikale bildenden Initiatoren umgesetzt wurde.

Zur Verbesserung der Bedruckbarkeit und des optischen Erscheinungsbildes von Papier und Karton werden Papier- bzw. Kartonoberflächen häufig mit sogenannten Papierstreichmassen gestrichen. Papierstreichmassen enthalten neben Wasser im allgemeinen Pigmente, Bindemittel und Hilfsmittel zur Einstellung der erforderlichen rheologischen Eigenschaften, z. B. Verdicker. Durch Papierstreichmassen erhalten Rohpapiere die gewünschten mechanischen und optischen Eigenschaften. Durch das Bindemittel sollen die Pigmente auf dem Papier fixiert und der Zusammenhalt in der erhaltenen Beschichtung gewährleistet werden Die mit den Papierstreichmassen beschichteten Papiere sollen insbesondere gut bedruckbar sein. Papierstreichmassen können mittels geeigneter Walzen auf eine fortlaufende Papierbahn aufgetragen werden, wobei überschüssige Streichmasse mit einer Klinge abgestreift und im Kreislauf dem Vorratsbehälter der Streichmasse zurückgeführt werden kann. Für eine einfache und problemlose Verarbeitung der wässrigen Papierstreichmasse ist ein auf das Verarbeitungsverfahren abgestimmtes rheologisches Verhalten gewünscht. Beim Auftragen unter niedriger Scherung sollte die Viskosität möglichst hoch sein, beim Abstreifen unter hoher Scherung sollte die Viskosität möglichst gering sein. Außerdem sollte das rheologische Verhalten bei einem kontinuierlichen Auftrag mit Rückführung abgestreifter Masse im Kreislauf möglichst lange zeitlich konstant bleiben. Durch die Saugwirkung des Papiers wird der Streichmasse ständig Wasser entzogen und es kann dadurch zu unerwünschten Viskositätserhöhungen kommen. Gewünscht sind daher Streichmassen, welche eine möglichst gute Wasserretention aufweisen. Gewünscht sind außerdem Streichmassen mit einem möglichst hohen Feststoffgehalt, da bei der Trocknung weniger Wasser entfernt werden muss und Energiekosten gespart werden können.

Die zur Herstellung der Streichmassen verwendete Verdickerzusammensetzung sollte deshalb möglichst hoch konzentriert aber dennoch zunächst niedrigviskos sein und erst bei Anwendung (z.B. durch pH-Werteinstellung) ihre verdickende Wirkung entfalten. Hochkonzentrierte aber dennoch niedrigviskose Polymerzusammensetzungen können z.B. als Polymerdispersionen durch Emulsionspolymerisation hergestellt werden, wobei aber häufig die erreichbare Kettenlänge der Polymere beschränkt ist (insbesondere im Fall von Acrylsäurepolymeren) und die Wasserretention der hiermit hergestellten Papierstreichmassen noch nicht vollständig befriedigend ist. Die Wasserretention kann durch Wechselwirkung mit den übrigen Bestandteilen einer Papiermasse negativ beeinflusst werden. Hierbei handelt es sich um komplexe Einflussfaktoren, deren Auswirkungen schwer vorhersehbar sind. Die Verwendung von Assoziatiwerdickern zur Einstellung der rheologischen Eigenschaften von Papierstreichmassen ist bekannt aus der WO 2004/076743. Assoziativverdicker und deren Anwendung u.a. in Papierstreichmassen sind auch bekannt aus der EP 0011806. Assoziativverdicker für andere Anwendungszwecke sind bekannt aus der EP 0013836, der EP 0216479 und der US 2007/0155880. Die Eigenschaften der bekannten Verdickersysteme sind bei Papierstreichanwendungen hinsichtlich einer Optimierung von Viskosität bei niedriger Scherung, Viskosität bei hoher Scherung und Wasserretention noch nicht vollständig zufriedenstellend.

Aufgabe der vorliegenden Erfindung war es, Verdicker, insbesondere für Verwendungen in Papierstreichmassen mit gutem rheologischen Anwendungsprofil und guter Wasserretention zur Verfügung zu stellen.

Gegenstand der Erfindung ist ein Assoziativverdicker, gebildet durch radikalische Polymerisation von
a) 25 bis 55 Gew.-% an mindestens einem Säuremonomer, ausgewählt aus Acrylsäure, Methacrylsäure und deren Gemisch;
b) 0,1 bis 5 Gew.-% an mindestens einem Assoziativmonomer der allgemeinen Formel

   H₂C=CR¹-COO-(EO)ₙ-R₂

   wobei R¹ Wasserstoff oder Methyl bedeutet, EO eine Ethylerioxidgruppe bedeutet, n eine Zahl von 10 bis 40 bedeutet und R² eine C₁₀ bis C₃₀-Alkylgruppe ist.
c) 20 bis 70 Gew.-% an nichtionischen, von a) und b) verschiedenen, copolymerisierbaren Monomeren, ausgewählt aus solchen der allgemeinen Formel

   CH₂=CYZ

   wobei Y für H, CH₃ oder Chlor steht; Z für COOR, CONH₂, CONHR, CONR₂, C₆H₄R', CN, Cl, -OCOR" oder CH=CH₂ steht; R für C1-C8 Alkyl oder C₂-C₈ Hydroxyalkyl steht; R' für H, Cl, Br oder C₁-C₄ steht und R" für C₁-C₈ Alkyl steht, wobei der Initiator für die Umsetzung des Reaktionsproduktes nach der Polymerisation ein Red-Ox-Initiator-System ist, wobei als Oxidationskomponente mindestens eine Peroxidverbindung eingesetzt wird, ausgewählt aus Wasserstoffperoxid tert-Butylhydroperoxid und als Reduktionskomponente ein organisches Reduktionsmittel, das Ascorbinsäure ist, eingesetzt wird.

Assoziativverdicker sind hydrophile, wasserlösliche oder wasserquellbare Polymere mit hydrophoben End- oder Seitengruppen. Die hydrophoben End- oder Seitengruppen sind wasserunlöslich. Die Struktur der Assoziativverdicker ist ähnlich derjenigen von oberflächenaktiven Substanzen. Die Wechselwirkung der hydrophoben End- oder Seitengruppen untereinander bewirkt eine hohe Viskosität bei geringer Scherbelastung. Die Menge an Säuremonomeren a) ist vorzugsweise mindestens 25 Gew.-%, z.B. von 25 bis 55 oder von 30 bis 55 Gew.-% oder von 35 bis 50 Gew.-%, besonders bevorzugt im Falle von Methacrylsäure mindestens 40 Gew.-%, z.B. 40 bis 55 Gew.-%, bezogen auf die Summe aller Monomere. Die Säuremonomere sind ethylenisch ungesättigte C₃- bis C₈-Carbonsäure, insbesondere radikalisch polymerisierbare, alpha,betaethylenisch ungesättigte C₃-bis C₈-Carbonsäuren. Bevorzugte Säuremonomere haben die allgemeine Formel

RCH=CRCOOH

wobei R für H, CH₃ oder COOX steht, wobei wenn R für H steht, R' für H, C₁-C₄ Alkyl oder CH₂COOX steht, und wenn R für CH₃ steht, R' für H steht, und wenn R für COOX steht, R' für H oder CH₂COOX steht, wobei X für H oder C₁-C₄ Alkyl steht. Säuremonomere sind z.B. Acrylsäure, Methacrylsäure, Itaconsäure, Fumarsäure, Crotonsäure, Aconitsäure und Maleinsäure sowie im Falle von Polycarbonsäuren deren entsprechenden Halb- bzw. Teilester. Die Säuremonomere können einzeln oder in Mischungen eingesetzt werden. Besonders bevorzugt sind Acrylsäure, Methacrylsäure und deren Gemisch.

Die Menge an Assoziativmonomeren b) ist vorzugsweise von 0,1 bis 10 Gew.-%, besonders bevorzugt maximal 5 Gew.-% oder maximal 2 Gew.-%, z.B. von 0,1 bis 5 Gew.-% oder von 0,2 bis 2%, bezogen auf die Summe aller Monomere. Assoziativmonomere sind radikalisch polymerisierbare oberflächenaktive, Stoffe, welche sowohl hydrophile als auch hydrophobe Gruppen aufweisen. Hydrophobe Gruppen sind z.B. C₈-C₃₀ Alkylgruppen oder C₈-C₃₀ Alkarylgruppen. Hydrophile Gruppen sind z.B. Polyethylenoxidgruppen mit mindestens zwei Ethylenoxideinheiten. Die Assoziativmonomere haben die allgemeine Formel

H₂C=CR¹-COO-(EO)ₙ-(PO)ₘ-R²

wobei R¹ Wasserstoff oder Methyl bedeutet, n eine Zahl von mindestens zwei, vorzugsweise 6 bis 100 oder 10 bis 40 bedeutet, m eine Zahl von Null bis 50, vorzugsweise Null bis 20 bedeutet, EO eine Ethylenoxidgruppe (-CH2-CH2-O-) bedeutet, PO eine Propylenoxidgruppe (-CH₂-CH(CH₃)-O-) bedeutet und R² eine C8-C30 Alkylgruppe öder eine C₈-C₃₀ Alkarylgruppe bedeutet, wobei n vorzugsweise größer oder gleich m ist und n+m vorzugsweise 6 bis 100 oder 10 bis 40 ist.

Assoziativmonomere b) sind z.B. solche der Formeln (III) bis (VI) der EP 0011806. Geeignet sind z.B. oberflächenaktive Alkylphenoxypoly(ethylenoxy)ethyl(meth)acrylatester der Formel

Ar-O-(EO)ₙ-CO-CR=CH₂

wobei Ar für eine mit einer C₈-C₁₆-Alkylgruppe substituierte Phenylgruppe steht, R für H oder CH₃ steht, EO für eine Ethylenoxidgruppe -C₂H₄O- steht und n eine Zahl von 6 bis 100, vorzugsweise 10 bis 40 ist.

Geeignet sind z.B. auch Alkoxypoly(ethylenoxy)ethyl(meth)acrylatester der Formel

R"-O-(EO)ₙ-CO-CR=CH₂

wobei R" für eine C₈-C₂₀-Alkylgruppe steht, R für H oder CH₃ steht, EO für eine Ethylenoxidgruppe -C₂H₄O steht und n eine Zahl von 6 bis 50, vorzugsweise 10 bis 40 ist.

Geeignet sind z.B. auch Alkoxypoly(alkylenoxy)ethyl(meth)acrylatester der Formel

R"-O-(PO)ₘ,-(EO)ₙ-C2H4_{O}-CO-CR=CH2

wobei R" für eine C₈-C₂₀-Alkylgruppe steht, R für H oder CH₃ steht, EO für eine Ethylenoxidgruppe -C₂H₄O- steht, PO für eine Propylenoxidgruppe -CH₂-CH(CH₃)-O-steht, n eine Zahl von 6 bis 50, vorzugsweise 10 bis 40 ist und m eine Zahl von 1 bis 40 ist.

Besonders bevorzugte Monomere b) haben die allgemeine Formel

H₂C=CR¹-COO-(EO)ₙ-R²

wobei R¹ Wasserstoff oder Methyl bedeutet, n eine Zahl von 10 bis 40 bedeutet und R² eine C₁₀ bis C₃₀-Alkylgruppe ist. Geeignet ist z.B. ein Methacrylsäureester eines mit ca. 25 mol Ethylenoxid ethoxylierten C16-C18-Fettalkoholgemisches, erhältlich unter der Bezeichnung PLEX® 6954-O.

Die Menge an copolymerisierbaren nichtionischen Monomeren c) ist vorzugsweise von 20 bis 70 Gew.-%, oder von 25 bis 60 Gew.-% oder von 30 bis 58 Gew.-%, bezogen auf die Summe aller Monomere. Nichtionische Monomere c) können solche sein der allgemeinen Formel

CH₂=CYZ

wobei Y für H, CH₃ oder Chlor steht; Z für COOR, CONH₂, CONHR, CONR₂, C₆H₄R', CN,Cl, -OCOR" oder CH=CH₂ steht; R für C₁-C₈ Alkyl oder C₂-C₈ Hydroxyalkyl steht; R' für H, Cl, Br oder C₁-C₄ steht und R" für C₁-C₈ Alkyl steht. Bevorzugte nichtionische Monomere sind solche, bei denen wenn Y für H steht, Z dann COOR, CONH₂, CONHR, CONR₂, C₆H₄R', CN, Cl, -OCOR" oder CH=CH₂ ist; oder wenn Y für CH₃ steht, Z dann COOR, CONH₂, CONHR, CONR₂, C₆H₄R', CN, oder CH=CH₂ ist; oder wenn Y für Cl steht, Z dann Cl ist.

Nichtionische Monomere c) können insbesondere ausgewählt sein aus C₁-C₂₀-Alkyl-(meth)acrylaten, Vinylestern von bis zu 20 C-Atome enthaltenden Carbonsäuren, Vinylaromaten mit bis zu 20 C-Atomen, Vinylhalogeniden, aliphatischen Kohlenwasserstoffen mit 2 bis 8 C-Atomen und ein oder zwei Doppelbindungen, Ethergruppen enthaltende Monomere, insbesondere Vinylether von 1 bis 10 C-Atome enthaltenden Alkoholen und Monomeren mit mindestens einem Stickstoffatom im Molekül oder Mischungen dieser Monomeren. Stickstoffmonomere sind z.B. Vinylcarbonsäureamide, (Meth)acrylamid, N-Vinylformamid, N-Vinylacetamid, N-Methyl-N-vinylformamid, N-Methyl-N-vinylacetamid, N-Vinylpyrrolidon, N-Vinylcaprolactam, Vinylimidazol. Typische nichtionische Monomere c) sind z.B. C₁-C₈ Alkylester und C₂-C₈ Hydroxyalkylester von Acrylsäure oder von Methacrylsäure, beispielsweise Ethylacrylat, Ethylmethacrylat, Methylmethacrylat, 2-Ethylhexylacrylat, Butylacrylat, Butylmethacrylat, 2-Hydroxyethylacrylat, 2-Hydroxybutylmethacrylat; Styrol, Vinyltoluol, t-Butylstyrol, l-sopropylstyrol, p-Chlorstyrol; Vinylacetat, Vinylbutyrat, Vinylcaprolat; Acrylnitril, Methacrylnitril, Butadien, Isopren, Vinylchlorid, Vinylidenchlorid, und ähnliche. Bevorzugte nichtionische Monomere c) sind ausgewählt aus der Gruppe bestehend aus Acrylsäureestern von einwertigen Alkoholen mit 1 bis 20 C-Atomen und Methacrylsäureestern von einwertigen Alkoholen mit 1 bis 20 C-Atomen.

Die erfindungsgemäßen Assoziativverdicker sind herstellbar durch radikalische Polymerisation, insbesondere durch Emulsionspolymerisation. Bei der Emulsionspolymerisation werden in der Regel ionische und/oder nicht-ionische Emulgatoren und/oder Schutzkolloide bzw. Stabilisatoren als grenzflächenaktive Verbindungen verwendet, um die Dispergierung der Monomeren in dem wässrigen Medium zu unterstützen. Bei den Emulgatoren handelt es sich vorzugsweise um anionische oder nichtionische Emulgatoren. Geeignete Emulgatoren sind beispielsweise ethoxylierte C₈- bis C₃₆- oder C₁₂-bis C₁₈-Fettalkohole mit einem Ethoxylierungsgrad von 3 bis 50 oder von 4 bis 30, ethoxylierte Mono-, Di- und Tri-C₄- bis C₁₂- oder C₄- bis C₉-Alkylphenole mit einem Ethoxylierungsgrad von 3 bis 50, Alkalimetallsalze von Dialkylestern der Sulfobernsteinsäure, Alkalimetall- und Ammoniumsalze von C₈- bis C₁₂-Alkylsulfaten, Alkalimetall- und Ammoniumsalze von C₁₂- bis C₁₈-Alkylsulfönsäuren und Alkalimetall- und Ammoniumsalze von C₉- bis C₁₈-Alkylarylsulfonsäuren. Kationaktive Emulgatoren sind z.B. Verbindungen mit mindestens einer Amino- oder Ammoniumgruppe und mindestens einer C₈-C₂₂-Alkylgruppe. Weitere geeignete Emulgatoren sind Verbindungen der allgemeinen Formel 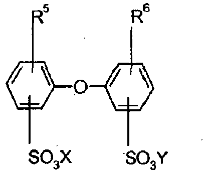 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax®2A1 (Warenzeichen der Dow Chemical Company). Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208. Handelsnamen von Emulgatoren sind z. B. Dowfax®2 A1, Emulan® NP 50, Dextrol®OC 50, Emulgator 825, Emulgator 825 S, Emulan®OG, Texapon® NSO, Nekanil® 904 S, Lumiten® I-RA, Lumiten® E 3065, Disponil® FES 77, Lutensol® AT 18, Steinapol® VSL, Emulphor® NPS 25. Geeignet sind auch copolymerisierbare Emulgatoren, welche eine radikalisch polymerisierbare, ethylenisch ungesättigte Doppelbindung enthalten, z.B. reaktive anionische Emulgatoren wie Adeka® Resoap SR-10.

Die Emulsionspolymerisation erfolgt in der Regel bei 30 bis 130, vorzugsweise 50 bis 90 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich oder auch stufenweise zuführt.

Bei der Emulsionspolymerisation können die üblichen und bekannten Hilfsstoffe, wie z.B. wasserlösliche Initiatoren und Regler eingesetzt werden. Bei der Emulsionspolymerisation verwendet man üblicherweise Initiatoren, die unter den Reaktionsbedingungen Radikale bilden. Die Menge der Initiatoren beträgt im Allgemeinen 0,1 bis 10 Gew.-% oder 0,5 bis 5 Gew.-%, bezogen auf die zu polymerisierenden Monomeren. Die Initiatoren werden vorzugsweise in Mengen bis zu 2 Gew.-%, und vorzugsweise zu mindestens 0,9 Gew.-%, z.B. von 1,0 bis 1,5 Gew.-%, bezogen auf die zu polymerisierenden Monomeren, eingesetzt. Geeignete Polymerisationsinitiatoren sind z.B. Peroxide, Hydroperoxide, Wasserstoffperoxid, Natrium- oder Kaliumpersulfat, Redoxkatalysatoren und Azoverbindungen wie 2,2-Azobis(4-methoxy-2,4=dimethylvaleronitril), 2,2=Azobis(2,4-dimethylvaleronitril) und 2,2-Azobis(2-amidinopropan)dihydrochlorid. Beispiele für weitere geeignete Initiatoren sind Dibenzoylperoxid, tert.-Butylperpivalat, tert.-Butyl-per-2-ethylhexanoat, Di-tert.-butylperoxid, Diamylperoxid, Dioctanoylperoxid, Didecanoylperoxid, Dilauroylperoxid, Bis(o-toluyl)peroxid, Succinylperoxid, tert.-Butylperacetat, tert.-Butylpermaleinat, tert.-Butylperisobutyrat, tert.-Butylperpivalat, tert.-Butylperoctoat, tert.-Butylperbenzoat, tert.-Butylhydroperoxid, Azobisisobutyronitril, 2,2'-Azo-bis-(2-methylbutyronitril), 2,2'-Azobis(2,4-dimethylvaleronitril) und 2,2'-Azo-bis(N,N'-dimethylenisobutyroamidin)dihydrochlorid. Bevorzugt sind Initiatoren ausgewählt aus der Gruppe der Peroxodisulfate, Peroxosulfate, Azoinitiatoren, organischen Peroxide, organischen Hydroperoxide und Wasserstoffperoxid. Geeignet sind auch sogenannte Reduktions-Oxidations (Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponenten handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natrium-peroxidisulfat, tert-Butylhydroperoxid/Natriumdisulfit, tert-Butylhydroperoxid/Na-Hydroxymethansulfinsäure oder tert-Butylhydroperoxid/Ascorbinsäure. Die einzelnen Komponenten, z. B. die Reduktionskomponente, können auch Mischungen sein z. B. eine Mischung aus dem Natriumsalz der Hydroxymethansulfinsäure und Natriumdisulfit. Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Besonders bevorzugt werden wasserlösliche Initiatoren eingesetzt, z. B. Natriumpersulfat, Kaliumpersulfat, Ammoniumpersulfat, Natriumperoxodisulfat, Kaliumperoxodisulfat und/oder Ammoniumperoxodisulfat. Man kann die Polymerisation auch mit Hilfe energiereicher Strahlen wie Elektronenstrahlen oder durch Bestrahlen mit UV-Licht initiieren. Es können auch mehrere, verschiedene Initiatoren bei der Emulsionspolymerisation Verwendung finden.

Bei der Polymerisation können Regler eingesetzt werden, z. B. in Mengen von 0 bis 0,8 Gew.-Teile oder von 0,05 bis 0,5 Gew.-Teile, bezogen auf 100 Gew.-Teile der zu polymerisierenden Monomeren, wodurch die Molmasse verringert wird. Geeignet sind z.B. Verbindungen mit einer Thiolgruppe wie tert.-Butylmercaptan, Thioglycolsäureethylacrylester, Mercaptoethanol, Mercaptopropyltrimethoxysilan oder tert.-Dodecylmercaptan. Weiterhin können Regler ohne Thiolgruppe verwendet werden, wie z.B. Terpinolen. In einer bevorzugten Ausführungsform ist das Emulsionspolymerisat hergestellt ohne Verwendung von Molekulargewichtsreglem.

Die erfindungsgemäßen Assoziativverdicker sind dadurch gekennzeichnet, dass das primär gebildete Reaktionsprodukt nach der eigentlichen Polymerisation einer Nachbehandlung unterworfen wird und mit nichtionische Radikale bildenden Initiatoren umgesetzt wird. Bei den nichtionischen Radikalen handelt es sich um Hydroxyradikale, die z.B. aus Wasserstoffperoxid oder aus organischen Hydroperoxiden gebildet werden. Beispiele für Initiatoren für die Nachbehandlung sind Wasserstoffperoxid, , tert.-Butylhydroperoxid. Erfindungsgemäß werden Peroxidverbindungen eingesetzt, die ausgewählt sind aus Wasserstoffperoxid und tert.-Butylhydroperoxid.

Erfindungsgemäß wird zur Nachbehandlung ein Red-Ox-Initiator-System eingesetzt, wobei als Oxidationskomponente mindestens eine Peroxidverbindung eingesetzt wird, ausgewählt aus Wasserstoffperoxid und tert.-Butylhydroperoxid und als Reduktionskomponente Ascorbinsäure eingesetzt wird. Für die Nachbehandlung sind Wasserstoffperoxid/Ascorbinsäure und tert-Butylhydroperoxid/Ascorbinsäure geeignet.

Die für die Nachbehandlung verwendeten Initiatormengen sind vorzugsweise von 0,001 bis 0,1 Gew.-Teile, besonders bevorzugt von 0,002 bis 0,05 Gew.-Teile, bezogen auf 100 Gew.-Teile Monomere.

Die Zugabe der Initiatoren für die Nachbehandlung erfolgt, nachdem die Hauptpolymerisation der Monomere stattgefunden hat, d.h. nachdem vorzugsweise mehr als 50 Gew.-%, insbesondere mindestens 70 Gew.-% oder mindestens 90 Gew.-% oder besonders bevorzugt 100 Gew.-% aller Monomere zugegeben sind und vorzugsweise mehr als 50 Gew.-%, insbesondere mindestens 70 Gew.-% oder mindestens 90 Gew.-% aller Monomere polymerisiert sind.

Die Nachbehandlung mit den nichtionische Radikale bildenden Initiatoren erfolgt vorzugsweise bei Temperaturen von mindestens 60°C, besonders bevorzugt von mindestens 70°C, z.B. bei 60-130 °C oder bei 70-90 °C.

Erfindungsgemäß ist der Assoziativverdicker dadurch gekennzeichnet, dass er gebildet ist durch radikalische Polymerisation von
a) 25 bis 55 Gew.-% an mindestens einem Säuremonomer, ausgewählt aus Acrylsäure, Methacrylsäure und deren Gemisch;
b) 0,1 bis 5 Gew.-% an mindestens einem Assoziativmonomer der allgemeinen Formel

   H₂C=CR¹-COO-(EO)ₙ-R²

   wobei R¹ Wasserstoff oder Methyl bedeutet, n eine Zahl von 10 bis 40 bedeutet und R² eine C₁₀ bis C₃₀-Alkylgruppe ist,
c) 20 bis 70 Gew.-% an nichtionischen, von a) und b) verschiedenen, copolymerisierbaren Monomeren, ausgewählt aus solchen der allgemeinen Formel

   CH₂=CYZ

   wobei Y für H, CH₃ oder Chlor steht; Z für COOR, CONH₂, CONHR, CONR₂, C₆H₄R', CN, Cl, -OCOR" oder CH=CH₂ steht; R für C1-C8 Alkyl oder C₂-C₈ Hydroxyalkyl steht; R' für H, Cl, Br oder C₁-C₄ steht und R" für C₁-C₈ Alkyl steht, wobei der Initiator für die Umsetzung des Reaktionsproduktes nach der Polymerisation ein Red-Ox-Initiator-System ist, wobei als Oxidationskomponente mindestens eine Peroxidverbindung eingesetzt wird, ausgewählt aus Wasserstoffperoxid und tert-Butylhydroperoxid und als Reduktionskomponente ein organisches Reduktionsmittel, das Ascorbinsäure ist, eingesetzt wird.

Gegenstand der Erfindung ist auch ein Verfahren zur Herstellung des oben beschriebenen Assoziativverdickers, wobei ein Monomergemisch aus
a) 25 bis 55 Gew.-% an mindestens einem Säuremonomer, ausgewählt aus Acrylsäure, Methacrylsäure und deren Gemisch;
b) 0,1 bis 5 Gew.-% an mindestens einem Assoziativmonomer der allgemeinen Formel

   H₂C=CR¹-COO-(EO)ₙ-R²

   wobei R¹ Wasserstoff oder Methyl bedeutet, n eine Zahl von 10 bis 40 bedeutet und R² eine C₁₀ bis C₃₀-Alkylgruppe ist,
c) 20 bis 70 Gew.-% an nichtionischen, von a) und b) verschiedenen, copolymerisierbaren Monomeren, ausgewählt aus solchen der allgemeinen Formel

   CH₂=CYZ

   wobei Y für H, CH₃ oder Chlor steht; Z für COOR, CONH₂, CONHR, CONR₂, C₆H₄R', CN, Cl, -OCOR" oder CH=CH₂ steht; R für C1-C8 Alkyl oder C₂-C₈ Hydroxyalkyl steht; R' für H, Cl, Br oder C₁-C₄ steht und R" für C₁-C₈ Alkyl steht,
   radikalisch polymerisiert werden und das Reaktionsprodukt nach der Polymerisation mit nichtionische Radikale bildenden Initiatoren umgesetzt wird,
   wobei der Initiator für die Umsetzung des Reaktionsproduktes nach der Polymerisation ein Red-Ox-Initiator-System ist, wobei als Oxidationskomponente, mindestens eine Peroxidverbindung eingesetzt wird, ausgewählt aus Wasserstoffperoxid und tert-Butylhydroperoxid und als Reduktionskomponente ein organisches Reduktionsmittel, das Ascorbinsäure ist, eingesetzt wird.

Die erfindungsgemäßen Assoziativverdicker werden vorzugweise in Form von wässrigen Verdickerzusammensetzungen verwendet. Gegenstand der Erfindung sind daher auch wässrigen Verdickerzusammensetzungen, welche mindestens einen erfindungsgemäßen Assoziativverdicker in einer Menge von vorzugsweise 20 bis 40 Gew.-% oder von 25 bis 30 Gew.-%, dispergiert in Wasser enthalten. Die Dispersion ist vorzugsweise mit Tensiden stabilisiert. Der pH-Wert beträgt vorzugsweise 2,0 bis 3,5.

Die erfindungsgemäßen Assoziativverdicker werden vorzugsweise als Verdicker für Papierstreichmittel verwendet. Ein Gegenstand der Erfindung ist daher auch eine Papierstreichmasse, enthaltend mindestens einen erfindungsgemäßen Assoziativverdicker, anorganische Pigmente, mindestens ein Bindemittel und Wasser sowie optional weitere Zusatzstoffe.

Papierstreichmassen enthalten neben Wasser im allgemeinen Pigmente, Bindemittel und Hilfsmittel zur Einstellung der erforderlichen rheologischen Eigenschaften, z. B. Verdicker. Die Pigmente sind üblicherweise in Wasser dispergiert. Die Papierstreichmasse enthält Pigmente in einer Menge von vorzugsweise mindestens 80 Gew.-%, z.B. 80 bis 95 Gew.-% oder 80 bis 90 Gew.-%, bezogen auf den Gesamtfeststoffgehalt. In Betracht kommen insbesondere Weißpigmente. Geeignete Pigmente sind beispielsweise Metallsalzpigrnente wie z.B. Calciumsulfat, Calciumaluminatsulfat, Bariumsulfat, Magnesiumcarbonat und Calciumcarbonat, wovon Carbonatpigmente, insbesondere Calciumcarbonat bevorzugt sind. Das Calciumcarbonat kann gemahlenes Calciumcarbonat (GCC, natural ground calcium carbonate), ausgefälltes Calciumcarbonat (PCC, precipitated calcium carbonate), Kalk oder Kreide sein. Geeignete Calciumcarbonatpigmente sind z.B. verfügbar als Covercarb® 60, Hydrocarb® 60 oder Hydrocarb® 90 ME. Weitere Geeignete Pigmente sind z.B. Kieselsäuren, Aluminiumoxide, Aluminiumhydrat, Silikate, Titandioxid, Zinkoxid, Kaolin, Tonerde, Talkum oder Siliziumdioxid. Geeignete weitere Pigmente sind z.B. verfügbar als Capim® MP 50 (Clay), Hydragloss® 90 (Clay) oder Talcum C10.

Die erfindungsgemäßen Assoziativverdicker werden in den erfindungsgemäßen Papierstreichmassen zur Anpassung der gewünschten Rheologie eingesetzt. Die Einsatzmengen betragen vorzugsweise von 0,05 bis 5 oder von 0,1 bis 2 Gewichtsteile, bezogen auf 100 Gewichtsteile Pigmente.

Die Papierstreichmasse enthält mindestens ein Bindemittel. Die wichtigsten Aufgaben von Bindemitteln in Papierstreichmassen sind, die Pigmente an das Papier und die Pigmente untereinander zu verbinden und teilweise Hohlräume zwischen Pigmentpartikeln aufzufüllen. Auf 100 Gew.-Teile Pigmente verwendet man beispielsweise 1 bis 50 Gew.-Teile, vorzugsweise 1 bis 25 Gew.-Teile oder 5 bis 20 Gew.-Teile eines organischen Bindemittels (fest, d.h. ohne Wasser oder sonstige bei 21°C, 1 bar flüssige Lösemittel).

Als Bindemittel in Betracht kommen Bindemittel auf natürlicher Basis, insbesondere Bindemittel auf Stärkebasis sowie synthetische Bindemittel, insbesondere durch Emulsionspolymerisation herstellbare Emulsionspolymerisate. Unter Bindemitteln auf Stärkebasis soll in diesem Zusammenhang jegliche native, modifizierte oder abgebaute Stärke verstanden werden. Native Stärken können aus Amylose, Amylopektin oder deren Gemischen bestehen. Bei modifizierten Stärken kann es sich um oxydierte Stärke, Stärkeester oder Stärkeether handeln. Durch Hydrolyse kann das Molgewicht der Stärke verringert werden (abgebaute Stärke). Als Abbauprodukte kommen Oligosaccharide oder Dextrine in Betracht. Bevorzugte Stärken sind Getreide-, Mais- und Kartoffelstärke. Besonders bevorzugt sind Getreide- und Maisstärke, ganz besonders bevorzugt Getreidestärke. Bei Verwendung von synthetischen Bindemitteln können auch natürliche Bindemittel wie Stärke mit verwendet werden, sind jedoch nicht zwingend erforderlich.

Die synthetischen Bindemittel bestehen vorzugsweise zu mindestens 40 Gew.-%, bevorzugt zu mindestens 60 Gew.-%, besonders bevorzugt zu mindestens 80 Gew.-% aus so genannten Hauptmonomeren. Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren. Zu nennen sind z. B. (Meth)acrylsäürealkylester mit einem C₁-C₁₀-Alkylrest, wie Methylmethacrylat, Methylacrylat, n-Butylacrylat, Ethylacrylat und 2-Ethylhexylacrylat. Insbesondere sind auch Mischungen der (Meth)-acrylsäurealkylester geeignet. Vinylester von Carbonsäuren mit 1 bis 20 C-Atomen sind z. B. Vinyllaurat, -stearat, Vinylpropionat, Versaticsäurevinylester und Vinylacetat. Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 2 bis 8 C-Atomen und ein oder zwei olefinischen Doppelbindungen seien Ethylen, Propylen, Butadien, Isopren und Chloropren genannt.

Bevorzugte Hauptmonomere sind C₁-C₁₀-Alkyl(meth)acrylate und Mischungen der Alkyl(meth)acrylate mit Vinylaromaten, insbesondere Styrol, oder Kohlenwasserstoffe mit 2 Doppelbindungen, insbesondere Butadien, oder Gemische von derartigen Kohlenwasserstoffen mit Vinylaromaten, insbesondere Styrol. Bei Gemischen von aliphatischen Kohlenwasserstoffen (insbesondere Butadien) mit Vinylaromaten (insbesondere Styrol) kann das Verhältnis z. B. zwischen 10:90 bis 90:10, insbesondere 20:80 bis 80:20 liegen. Besonders bevorzugte Hauptmonomere sind Butadien und die vorstehenden Mischungen von Butadien und Styrol.

Neben den Hauptmonomeren kann das als Bindemittel geeignete Emulsionspolymerisat weitere Monomere enthalten, z. B. Monomere mit Carbonsäure, Sulfonsäure oder Phosphonsäuregruppen. Bevorzugt sind Carbonsäuregruppen. Genannt seien z. B. Acrylsäure, Methacrylsäure, Itacorisäure, Maleinsäure oder Fumarsäure. Der Gehalt an ethylenisch ungesättigten Säuren im Emulsionspolymerisat ist im Allgemeinen kleiner 10 Gew.-%, vorzugsweise kleiner 8 Gew.-% und mindestens 0,1 Gew.-% oder mindestens 1 Gew.-%. Weitere Monomere sind z. B. auch Hydroxylgruppen enthaltende Monomere, insbesondere C₁-C₁₀-Hydroxyalkyl(meth)acrylate, oder Amide wie (Meth)acrylamid.

Erfindungsgemäße Papierstreichmassen können zusätzlich weitere Zusatz- und Hilfsstoffe enthalten, z.B. Füllstoffe, Co-Bindemittel und weitere Verdicker zur weiteren Optimierung von Viskosität und Wasserretention, optische Aufheller, Dispergatoren, Tenside, Gleitmittel (z.B. Calciumstearat und Wachse), Neutralisationsmittel (z.B. NaOH oder Ammoniumhydroxid) zur pH-Werteinstellung, Entschäumer, Entlüftungsmittel, Konservierungsmittel (z.B. Biocide), Verlaufshilfsmittel, Farbstoffe (insbesondere lösliche Farbstoffe) etc. Als weitere Verdicker kommen neben synthetischen Polymerisaten (z.B. vernetztes Polyacrylat), insbesondere Cellulosen, vorzugsweise Carboxymethylcellulose in Betracht. Optische Aufheller sind z.B. Fluoreszenz- oder Phosphoreszensfarbstoffe, insbesondere Stilbene.

Es handelt sich vorzugsweise um eine wässrige Papierstreichmasse; sie enthält Wasser insbesondere bereits durch die Zubereitungsform der Bestandteile (wässrige Polymerdispersionen, wässrige Pigment-Slurries); die gewünschte Viskosität kann durch Zugabe von weiterem Wasser eingestellt werden. Übliche Feststoffgehalte der Papierstreichmassen liegen im Bereich von 30 bis 70 Gew.-%. Der pH Wert der Papierstreichmasse wird vorzugsweise auf Werte von 6 bis 10, insbesondere 7 bis 9,5 eingestellt.

Eine bevorzugte Ausführungsform der Erfindung betrifft eine Papierstreichmasse enthaltend
(i) 0,05 bis 2 Gewichtsteile, bezogen auf 100 Gewichtsteile Pigmente, mindestens eines oben beschriebenen, erfindungsgemäßen Assoziativverdickers,
(ii) 80 bis 95 Gew.-%, bezogen auf den Gesamtfeststoffgehalt, an Pigmenten, ausgewählt aus Calciumsulfat, Calciumaluminatsulfat, Bariumsulfat, Magnesiumcarbonat, Calciumcarbonat, Kieselsäuren, Aluminiumoxide, Aluminiumhydrat, Silikate, Titandioxid, Zinkoxid, Kaolin, Tonerde, Talkum und Siliziumdioxid,
(iii) 1 bis 25 Gewichtsteile, bevorzugt 5 bis 15 oder 8 bis 10 Gewichtsteile mindestens eines Bindemittels.

Gegenstand der Erfindung ist auch mit einer erfindungsgemäßen Papierstreichmasse, beschichtetes Papier oder Karton und ein Verfahren zum Streichen von Papier oder Karton, wobei
- ein erfindungsgemäßer Assoziativverdicker hergestellt oder zur Verfügung gestellt wird; und
- mit diesem Assoziativverdicker, mindestens einem Pigment, mindestens einem Bindemitteln und optionalen weiteren Hilfsstoffen eine Papierstreichmasse hergestellt wird; und die Papierstreichmasse auf mindestens eine Oberfläche von Papier oder Karton aufgebracht wird.

Die Papierstreichmasse wird vorzugsweise auf unbeschichtete Rohpapiere oder auf unbeschichteten Karton aufgetragen. Die Menge beträgt im allgemeinen 1 bis 50 g, vorzugsweise 5 bis 30 g (fest, d. h. ohne Wasser oder sonstige bei 21 °C, 1 bar flüssige Lösemittel) pro Quadratmeter. Die Beschichtung kann durch übliche Auftragverfahren erfolgen, z.B. mittels Leimpresse, Filmpresse, Bladecoater, Luftbürste, Rakel, Vorhangstreichverfahren (curtain coating) oder Spray-Coater. Je nach Pigmentsystem können die erfindungsgemäßen Assoziativverdicker in Papierstreichmassen für den Grundstrich und/oder für den Deckstrich verwendet werden.

Erfindungsgemäße Papierstreichmassen haben gute anwendungstechnische Eigenschaften, insbesondere gute rheologische Eigenschaften und gute Wasserretentionseigenschaften. Die beschichteten Papiere und Kartone sind in den üblichen Druckverfahren, wie Hochdruck, Tiefdruck, Offsetdruck, Digitaldruck, Inkjet-Druck, Flexodruck, Zeitungsdruck, Buchdruck, Sublimationsdruck, Laserdruck, elektrophotographischer Druck oder einer Kombination dieser Druckverfahren gut bedruckbar.

### Beispiele

Sofern sich aus dem Zusammenhang nichts anderes ergibt, bedeuten die Angaben in Prozent immer Gewichtsprozent. Die Angabe eines Gehalts bezieht sich auf den Gehalt in wässriger Lösung oder Dispersion.

### Beispiel 1: Herstellung eines Assoziativverdickers

In einem Reaktor mit Rührvorrichtung, Thermometer, Stickstoffanschlüssen, Rückflusskühler und Zuführvorrichtungen wird entionisiertes Wasser (772 g) und Emulgator (Disponil® SDS, 8 g, 15% in Wasser) vorgelegt. Der Reaktor wird mit Stickstoff gespült und auf 80 °C erwärmt. Es wird eine wässrige Emulsion hergestellt aus entionisiertem Wasser (186 g), Emulgator (Disponil ® SDS, 29,3 g, 15% in Wasser), Methacrylsäure (162 g), Methacrylsäureester eines mit 25 mol Ethylenoxid ethoxylierten C₁₆-C₁₈-Fettalkoholgemisches (PLEX® 6954-O, 3,5 g, 60%ig) und Ethylacrylat (194,8 g). In den Reaktor wird Natriumpersulfat (11,4 g, 7%ig in Wasser) zugefügt, gefolgt von dem Start des Zulaufs der Monomeremulsion. Die Monomeremulsion wird innerhalb eines Zeitraums von 2 Stunden kontinuierlich zugeführt. 20 Minuten nach Ende der Monomerzugabe wird Wasserstoffperoxid (0,13 g, 30% in Wasser) und Ascorbinsäure (32 g, 2% in Wasser) innerhalb von 40 Minuten in den Reaktor zugegeben. Es wird abgekühlt und 60 g Wasser zugegeben. Man erhält ein wässriges Emulsionspolymerisat mit einem Feststoffgehalt von 27,2%.

### Beispiel 2: Vergleich, ohne Red-OX-Initiatorsystem

Wie Beispiel 1, ohne Zugabe von Wasserstoffperoxid und ohne Zugabe von Ascorbinsäure nach Ende der Monomerzugabe.

### Beispiel 3: Vergleich, Nachbehandlung mit Natriumpersulfat

Wie Beispiel 1, Verwendung von Natriumpersulfat anstelle von Wasserstoffperoxid als Oxidationsmittel in der Nachbehandlung nach Ende der Monomerzugabe.

### Beispiel 4: Vergleich, ohne Initiatorzugabe

Wie Beispiel 1, ohne Zugabe von Wasserstoffperoxid nach Ende der Monomerzugabe.

Mit den wässrigen Assoziativverdickerzusammensetzungen der Beispiele 1-4 werden Papierstreichfarben hergestellt. Die Papierstreichfarben haben folgende Zusammensetzungen:

| | |
|---|---|
| 100 Gew.-Teile Pigment | (feinteiliges Calciumcarbonat, Hydrocarb® 60, Omya) |
| 10 Gew.-Teile Binder | (Styronal ® D 628; wässrige Dispersion eines Polymers auf Basis: Butadien, Styrol, Acrylnitril) |
| 0,18 Gew.Teile Verdicker der Beispiele 1-4 | |
| Feststoffgehalt: 65% | |
| pH 8,5 | |

Von den Papierstreichfarben werden jeweils die Viskosität und die Wasserretention gemessen. Die Ergebnisse sind in Tabelle 1 zusammengefasst.

Die (Brookfield-) Viskosität wird wie folgt gemessen:
Viskositäten der Papierstreichmassen werden gemessen bei Raumtemperatur (20°C) mit einem Brookfield-Viskosimeter bei 100 Umdrehungen pro Minute und Spindel Nr. 2, 15 Minuten nach dem Ansetzen der Streichmasse.

Die Wasserretention nach Gradek wird wie folgt gemessen:
Das Wasserrückhaltevermögen (Wasserretention, WR) wurde nach der GRADEK Methode gemessen. Die Methode charakterisiert eine Streichfarbe hinsichtlich ihres Wasserrückhaltevermögens in einer standardisierten Laborprüfung. Ein gutes Wasserrückhaltevermögen ist für die Verarbeitung einer Papierstreichmasse auf großen und schnell laufenden Papierbeschichtungsanlagen sehr wichtig. Die zu prüfende Streichfarbe wird unter definierten Bedingungen (Druck von 1 bar, Messzeit 1 Minute) über eine Polycarbonatmembran in eine Filterpapierschicht entwässert. Die von der Filterpapierschicht aufgenommene Wassermenge wird gravimetrisch bestimmt. Je mehr Wasser aufgenommen wurde, desto schlechter ist die Wasserretention der Papierstreichmasse. Die Angabe der aufgenommenen Wassermenge erfolgt in g/m². Da es bei Verwendung unterschiedlicher Chargen der Membranfilter zu Abweichungen in den Messergebnissen kommen kann, wird ein Vergleich verschiedener Streichfarben jeweils mit Membranfiltern der gleichen Charge durchgeführt.

### Verwendete Geräte und Materialien:

Druckfiltrationsgerät Abo Akademi Gravimetric Water Retention, Waage, mit der auf 0,1 mg gewogen werden kann, Polycarbonat-Membranfilter, Fa. Piper, Porengröße 5 µm, Durchmesser 47 mm, Schwarzbandfilterpapier Schleicher & Schüll Durchmesser 9 cm, Stoppuhr

**Tabelle 1: Viskosität und Wasserretention der Papierstreichfarben**

| Beispiel | Ox.-mittel | Red.-mittel | Viskosität [mPa s] | Wasserretention [g/m⁻²] |
|---|---|---|---|---|
| 1 | H₂O₂ | Ascorbinsäure | 2284 | 71,6 |
| 2 | - | - | 1148 | 77,4 |
| 3 | Persulfat | Ascorbinsäure | 1222 | 76,6 |
| 4 | - | Ascorbinsäure | 1724 | 76,4 |

Beispiel 1 zeigt, dass bei Verwendung von erfindungsgemäßen Assoziativverdickern Papierstreichfarben mit deutlich verbesserter Viskosität und deutlich verbesserter Wasserretention erhalten werden.

## Patentansprüche

1. Assoziatiwerdicker **dadurch gekennzeichnet, dass** er gebildet ist durch radikalische Polymerisation von
a) 25 bis 55 Gew.-% an mindestens einem Säuremonomer, ausgewählt aus Acrylsäure, Methacrylsäure und deren Gemisch;
b) 0,1 bis 5 Gew.-% an mindestens einem Assoziativmonomer der allgemeinen Formel
H₂C=CR¹-COO-(EO)ₙ-R²
wobei R¹ Wasserstoff oder Methyl bedeutet, EO eine Ethylenoxidgruppe bedeutet, n eine Zahl von 10 bis 40 bedeutet und R² eine C₁₀ bis C₃₀-Alkylgruppe ist.
c) 20 bis 70 Gew.-% an nichtionischen, von a) und b) verschiedenen, copolymerisierbaren Monomeren, ausgewählt aus solchen der allgemeinen Formel
CH₂=CYZ
wobei Y für H, CH₃ oder Chlor steht; Z für COOR, CONH₂, CONHR, CONR₂, C₆H₄R', CN, Cl, -OCOR" oder CH=CH₂ steht; R für C₁-C₈ Alkyl oder C₂-C₈ Hydroxyalkyl steht; R' für H, Cl, Br oder C₁-C₄ steht und R" für C₁-C₈ Alkyl steht,
wobei der Initiator für die Umsetzung des Reaktionsproduktes nach der Polymerisation ein Red-Ox-Initiator-System ist, wobei als Oxidationskomponente mindestens eine Peroxidverbindung eingesetzt wird, ausgewählt aus Wasserstoffperoxid und tert-Butylhydroperoxid und als Reduktionskomponente ein organisches Reduktionsmittel, das Ascorbinsäure ist, eingesetzt wird.

2. Verfahren zur Herstellung eines Assoziatiwerdickers nach Anspruch 1, **dadurch gekennzeichnet, dass** ein Monomergemisch aus
a) 25 bis 55 Gew.-% an mindestens einem Säuremonomer, ausgewählt aus Acrylsäure, Methacrylsäure und deren Gemisch;
b) 0.1 bis 5 Gew.-% an mindestens einem Assoziativmonomer der allgemeinen Formel
H₂C=CR¹-COO-(EO)ₙ-R²
wobei R¹ Wasserstoff oder Methyl bedeutet, EO eine Ethylenoxidgruppe bedeutet, n eine Zahl von 10 bis 40 bedeutet und R² eine C₁₀ bis C₃₀-Alkylgruppe ist.
c) 20 bis 70 Gew.-% an nichtionischen, von a) und b) verschiedenen, copolymerisierbaren Monomeren, ausgewählt aus solchen der allgemeinen Formel
CH₂=CYZ
wobei Y für H, CH₃ oder Chlor steht; Z für COOR, CONH₂, CONHR, CONR_{2,} C₈H₄R', CN, Cl, -OCOR" oder CH=CH₂ steht; R für C₁-C₈ Alkyl oder C₂-C₈ Hydroxyalkyl steht; R' für H, Cl, Br oder C₁-C₄ steht und R" für C₁-C₈ Alkyl steht,
radikalisch polymerisiert werden und das Reaktionsprodukt nach der Polymerisation mit nichtionische Radikale bildenden Initiatoren umgesetzt wird,
wobei der Initiator für die Umsetzung des Reaktionsproduktes nach der Polymerisation ein Red-Ox=Initiator-System ist, wobei als Oxidationskomponente mindestens eine Peroxidverbindung eingesetzt wird, ausgewählt aus Wasserstoffperoxid und tert-Butyfhydroperoxid und als Reduktionskomponente ein organisches Reduktionsmittel, das Ascorbinsäure ist, eingesetzt wird.

3. Wässrige Verdickerzusammensetzung enthaltend mindestens einen Assoziativverdicker gemäß Anspruch 1 dispergiert in Wasser.

4. Verwendung von Assoziativverdickern gemäß Anspruch 1 als Verdicker für Papierstreichmittel.

5. Papierstreichmasse enthaltend mindestens einen Assoziatiwerdicker gemäß Anspruch 1, anorganische Pigmente, mindestens ein Bindemittel und Wasser.

6. Papierstreichmasse nach dem vorhergehenden Anspruch, enthaltend
(i) 0,05 bis 2 Gewichtsteile, bezogen auf 100 Gewichtsteile Pigmente, mindestens eines Assoziativverdickers gemäß Anspruch 1,
(ii) 80 bis 95 Gew.-%, bezogen auf den Gesamtfeststoffgehalt, an Pigmenten, ausgewählt aus Calciumsulfat, Calciumaluminatsulfat, Bariumsulfat, Magnesiumcarbonat, Calciumcarbonat, Kieselsäuren, Aluminiumoxide, Aluminiumhydrat, Silikate, Titandioxid, Zinkoxid, Kaolin. Tonerde, Talkum und Siliziumdioxid,
(iii) 1 bis 25 Gewichtsteile mindestens eines Bindemittels.

7. Mit einer Papierstreichmasse gemäß einem der Ansprüche 5 bis 6 beschichtetes Papier oder Karton.

## Claims

1. An associative thickener which is formed by free radical polymerization of
a) from 25 to 55% by weight of at least one acid monomer selected from acrylic acid, methacrylic acid and a mixture thereof;
b) from 0.1 to 5% by weight of at least one associative monomer of the general formula
H₂C=CR¹-COO- (EO) ₙ-R²
in which R¹ is hydrogen or methyl, EO is an ethylene oxide group, n is a number from 10 to 40 and R² is a C₁₀- to C₃₀-alkyl group,
c) from 20 to 70% by weight of nonionic, copolymerizable monomers differing from a) and b) and selected from those of the general formula
CH₂=CYZ
in which Y is H, CH₃ or chlorine; Z is COOR, CONH₂, CONHR, CONR₂, C₆H₄R', CN, Cl, -OCOR" or CH=CH₂; R is C₁-C₈-alkyl or C₂-C₈-hydroxyalkyl; R' is H, Cl, Br or C₁-C₄ and R" is C₁-C₈-alkyl, the initiator for the reaction of the reaction product after the polymerization being a redox initiator system, the oxidizing component used being at least one peroxide compound selected from hydrogen peroxide and tert-butyl hydroperoxide, and the reducing component used being an organic reducing agent which is ascorbic acid.

2. A process for the preparation of an associative thickener according to claim 1, wherein a monomer mixture comprising
a) from 25 to 55% by weight of at least one acid monomer selected from acrylic acid, methacrylic acid and a mixture thereof;
b) from 0.1 to 5% by weight of at least one associative monomer of the general formula
H₂C=CR¹-COO- (EO) ₙ-R²
in which R¹ is hydrogen or methyl, EO is an ethylene oxide group, n is a number from 10 to 40 and R² is a C₁₀- to C₃₀-alkyl group,
c) from 20 to 70% by weight of nonionic, copolymerizable monomers differing from a) and b) and selected from those of the general formula
CH₂=CYZ
in which Y is H, CH₃ or chlorine; Z is COOR, CONH₂, CONHR, CONR₂, C₆H₄R', CN, Cl, -OCOR" or CH=CH₂; R is C₁-C₈-alkyl or C₂-C₈-hydroxyalkyl; R' is H, Cl, Br or C₁-C₄ and R" is C₁-C₈-alkyl, are subjected to free radical polymerization and the reaction product is reacted, after the polymerization, with initiators forming nonionic radicals, the initiator for the reaction of the reaction product after the polymerization being a redox initiator system, the oxidizing component used being at least one peroxide compound selected from hydrogen peroxide and tert-butyl hydroperoxide, and the reducing component used being an organic reducing agent which is ascorbic acid.

3. An aqueous thickener composition comprising at least one associative thickener according to claim 1, dispersed in water.

4. The use of associative thickeners according to claim 1 as thickeners for paper coating slips.

5. A paper coating slip comprising at least one associative thickener according to claim 1, inorganic pigments, at least one binder and water.

6. The paper coating slip according to the preceding claim, comprising
(i) from 0.05 to 2 parts by weight, based on 100 parts by weight of pigments, of at least one associative thickener according to claim 1,
(ii) from 80 to 95% by weight, based on the total solids content, of pigments selected from calcium sulfate, calcium aluminate sulfate, barium sulfate, magnesium carbonate, calcium carbonate, silicic acids, aluminum oxides, aluminum hydroxide, silicates, titanium dioxide, zinc oxide, kaolin, alumina, talc and silicon dioxide,
(iii) from 1 to 25 parts by weight of at least one binder.

7. A paper or cardboard coated with a paper coating slip according to either of claims 5 and 6.

## Revendications

1. Épaississant associatif, **caractérisé en ce qu'**il est formé par polymérisation radicalaire de
a) 25 à 55 % en poids d'au moins un monomère acide, choisi parmi l'acide acrylique, l'acide méthacrylique et un mélange de ceux-ci ;
b) 0,1 à 5 % en poids d'au moins un monomère associatif de formule générale
H₂C=CR¹-COO- (EO)ₙ-R²
dans laquelle R¹ représente un atome d'hydrogène ou le groupe méthyle, EO représente un groupe oxyde d'éthylène, n représente un nombre valant de 10 à 40 et R² est un groupe alkyle en C₁₀-C₃₀,
c) 20 à 70 % en poids de monomères non ioniques copolymérisables, différents de a) et b), choisis parmi ceux de formule générale
CH₂=CYZ
dans laquelle Y représente H, CH₃ ou un atome de chlore ; Z représente COOR, CONH₂, CONHR, CONR₂, C₆H₄R' , CN, Cl, -OCOR" ou CH=CH₂ ; R représente un groupe alkyle en C₁-C₈ ou hydroxyalkyle(C₂-C₈) ; R' représente H, Cl, Br ou C₁-C₄ et R" représente un groupe alkyle en C₁-C₈,
l'amorceur pour la conversion du produit de réaction après la polymérisation étant un système d'amorceur redox, en tant que composant d'oxydation étant utilisé au moins un composé de type peroxyde, choisi parmi le peroxyde d'hydrogène et le hydroperoxyde de tert-butyle et en tant que composant de réduction étant utilisé un réducteur organique qui est de l'acide ascorbique.

2. Procédé pour la préparation d'un épaississant associatif selon la revendication 1, **caractérisé en ce qu'**on copolymérise par voie radicalaire un mélange de monomères constitué de
a) 25 à 55 % en poids d'au moins un monomère acide, choisi parmi l'acide acrylique, l'acide méthacrylique et un mélange de ceux-ci ;
b) 0,1 à 5 % en poids d'au moins un monomère associatif de formule générale
H₂C=CR¹-COO- (EO)ₙ-R²
dans laquelle R¹ représente un atome d'hydrogène ou le groupe méthyle, EO représente un groupe oxyde d'éthylène, n représente un nombre valant de 10 à 40 et R² est un groupe alkyle en C₁₀-C₃₀,
c) 20 à 70 % en poids de monomères non ioniques copolymérisables, différents de a) et b), choisis parmi ceux de formule générale
CH₂=CYZ
dans laquelle Y représente H, CH₃ ou un atome de chlore ; Z représente COOR, CONH₂, CONHR, CONR₂, C₆H₄R' , CN, Cl, -OCOR" ou CH=CH₂ ; R représente un groupe alkyle en C₁-C₈ ou hydroxyalkyle(C₂-C₈) ; R' représente H, Cl, Br ou C₁-C₄ et R" représente un groupe alkyle en C₁-C₈,
et après la polymérisation on fait réagir le produit de réaction avec des amorceurs générateurs de radicaux non ioniques,
l'amorceur pour la conversion du produit de réaction après la polymérisation étant un système d'amorceur redox, en tant que composant d'oxydation étant utilisé au moins un composé de type peroxyde, choisi parmi le peroxyde d'hydrogène et le hydroperoxyde de tert-butyle et en tant que composant de réduction étant utilisé un réducteur organique qui est de l'acide ascorbique.

3. Composition aqueuse d'épaississant, contenant au moins un épaississant associatif selon la revendication 1, dispersé dans l'eau.

4. Utilisation d'épaississants associatifs selon la revendication 1, en tant qu'épaississant pour sauces de couchage pour papier.

5. Matière de couchage pour papier, contenant au moins un épaississant associatif selon la revendication 1, des pigments inorganiques, au moins un liant et de l'eau.

6. Matière de couchage pour papier selon la revendication précédente, contenant
(i) 0,05 à 2 parties en poids, par rapport à 100 parties en poids de pigments, d'au moins un épaississant associatif selon la revendication 1,
(ii) 80 à 95 % en poids, par rapport à la teneur en matière solide totale, de pigments, choisis parmi le sulfate de calcium, le sulfate-aluminate de calcium, le sulfate de baryum, le carbonate de magnésium, le carbonate de calcium, des acides siliciques, des oxydes d'aluminium, un hydrate d'aluminium, des silicates, le dioxyde de titane, l'oxyde de zinc, le kaolin, l'alumine, le talc et le dioxyde de silicium,
(iii) 1 à 25 parties en poids d'au moins un liant.

7. Papier ou carton couché avec une matière de couchage pour papier selon la revendication 5 ou 6.
